# EUROPEAN PATENT APPLICATION

(11) **EP 4 708 961 A1**
(43) Date of publication of application: **11.03.2026**
(21) Application number: 24830561.7
(22) Date of filing: 18.06.2024
(51) Int. Cl.: H04W 36/00

(54) **COMMUNICATION METHOD AND COMMUNICATION APPARATUS**

(30) Priority: 26.06.2023 CN 202310761135
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN); WANG, Yan, Shenzhen, Guangdong 518129 (CN)
(74) Representative: Gill Jennings & Every LLP
(86) International application number: PCT/CN2024/099786
(87) International publication number: WO 2025/001915

(57) **Abstract**

Embodiments of this application provide a communication method and apparatus. In the communication method, a target secondary node sends, to a target master node, a first triggering condition of a successful handover report SPR that records successful addition of the target secondary node or a successful change to the target secondary node, and the target master node sends, to a terminal device, the first triggering condition and a second triggering condition of a successful handover report SHR that records a successful handover to the target master node, so that a triggering condition of recording of the SPR may be configured for the terminal device in a scenario in which a master node handover causes a master secondary node change.

## Description

This application claims priority to Chinese Patent Application No. 202310761135.9, filed with the China National Intellectual Property Administration on June 26, 2023 and entitled "COMMUNICATION METHOD AND COMMUNICATION APPARATUS", which is incorporated herein by reference in its entirety.

### TECHNICAL FIELD

Embodiments of this application relate to the communication fields, and more specifically, to a communication method and a communication apparatus.

### BACKGROUND

In a primary cell (primary cell, PCell) handover process, a terminal device triggers recording of a successful handover report (successful handover report, SHR). Similarly, during a primary secondary cell (primary secondary cell, PSCell) addition or change, when a triggering condition is met, the terminal device triggers recording of a successful PSCell report (successful PSCell report, SPR).

The terminal device sends the recorded SHR or SPR to a network side, and the network side may optimize a mobility parameter of a PCell or a PSCell of the terminal device with reference to information about the SHR or information about the SPR.

Currently, a PCell handover causes a PSCell addition or change. In the PCell handover process, a target master node determines to add or change a PSCell. In a process in which the PCell handover causes the PSCell change, the target master node configures a T304 triggering condition of an SHR for the terminal device, and a source master node configures a T310 triggering condition and/or a T312 triggering condition of the SHR for the terminal device. However, a manner of configuring a triggering condition for the terminal device to perform recording of an SPR is unclear.

### SUMMARY

Embodiments of this application provide a communication method. According to the method, a triggering condition of recording of an SPR may be configured for a terminal device in a scenario in which a primary cell handover causes a primary secondary cell change.

According to a first aspect, a communication method is provided. The method may be performed by a target master node, may be performed by a component (for example, a processor, a chip, or a chip system) of the target master node, or may be implemented by a logical module or software that can implement all or some functions of the target master node. The method includes:

The target master node receives first information from a target secondary node, where the first information indicates a first triggering condition, the first triggering condition is used to determine whether to record a first report, and the first report includes information about a successful addition of the target secondary node by a terminal device or information about a successful change of the terminal device to the target secondary node. The target master node sends second information to the terminal device, where the second information includes the first information and third information, the third information indicates a second triggering condition, the second triggering condition is used to determine whether to record a second report, and the second report includes information about a handover of the terminal device to the target master node.

Specifically, that the target master node sends the second information to the terminal device may be: The target master node sends the second information to a source master node, and the source master node sends the second information to the terminal device.

Specifically, the third information may be determined by the target master node.

Specifically, the first report may be an SPR, and the second report may be an SHR.

According to the method, a triggering condition of recording of an SPR may be configured for the terminal device in a scenario in which a primary cell handover causes a primary secondary cell change.

With reference to the first aspect, in some implementations of the first aspect, the first triggering condition includes: When timing of a first timer reaches a first threshold, the terminal device records the first report, where the first information includes information about the first threshold.

Specifically, the first timer may be a T304 timer of the target secondary node. Specifically, the T304 timer of the target secondary node may be a T304 timer of a target primary secondary cell. Similarly, the "target secondary node" in the following may also be considered as a "target primary secondary cell". Details are not described in the following.

For example, the first threshold may be a first ratio.

Specifically, when running time of the first timer is greater than or equal to the first threshold, the terminal device records the first report; or when a ratio of running time of the first timer to configuration time of the first timer is greater than or equal to the first ratio, the terminal device records the first report.

With reference to the first aspect, in some implementations of the first aspect, the second triggering condition includes: When timing of a second timer reaches a second threshold, the terminal device records the second report, where the third information includes information about the second threshold.

Specifically, the second timer may be a T304 timer of the target master node. Specifically, the T304 timer of the target master node may be a T304 timer of a target primary cell.

For example, the second threshold may be a second ratio.

Specifically, when running time of the second timer is greater than or equal to the second threshold, the terminal device records the second report; or when a ratio of running time of the second timer to configuration time of the second timer is greater than or equal to the second ratio, the terminal device records the second report.

With reference to the first aspect, in some implementations of the first aspect, the first information further indicates a third triggering condition, the third triggering condition is used to determine whether to record the first report, the third triggering condition includes: When timing of a third timer reaches a third threshold, the terminal device records the first report, and the first information further includes information about the third threshold.

Specifically, the third timer may be a T310 timer or a T312 timer of the target secondary node. Specifically, the T310 timer or the T312 timer of the target secondary node may be a T310 timer or a T312 timer of a target primary secondary cell. Similarly, the "target secondary node" in the following may also be considered as a "target primary secondary cell". Details are not described in the following.

For example, the third threshold may be a third ratio.

Specifically, when running time of the third timer is greater than or equal to the third threshold, the terminal device records the first report; or when a ratio of running time of the third timer to configuration time of the third timer is greater than or equal to the third ratio, the terminal device records the first report.

Optionally, the third information further includes the third triggering condition of recording of the first report.

Optionally, the source master node or a source secondary node may further determine, for the terminal device, the third triggering condition of recording of the first report.

With reference to the first aspect, in some implementations of the first aspect, the second information further indicates that the first triggering condition is associated with the first timer of a secondary node, and/or the second information further indicates that the second triggering condition is associated with the second timer of a master node.

Optionally, the second information further indicates that the third triggering condition is associated with the third timer of the secondary node.

Specifically, that the first triggering condition is associated with the first timer of the secondary node may be understood as that the first triggering condition has a mapping relationship with the first timer of the secondary node, or may be understood as that the first triggering condition is a triggering condition used to determine, when the first timer of the secondary node runs, whether to record the first report.

According to the method, two sets of triggering conditions applicable to the first report and the second report may be explicitly indicated to the terminal device, to avoid occurrence of a case in which the terminal device cannot identify timers respectively corresponding to the two sets of triggering conditions.

With reference to the first aspect, in some implementations of the first aspect, the first information is included in a first container, and the first container is generated by the target secondary node and provided to the target master node; and the third information is included in a second container, and the second container is generated by the target master node and provided to the terminal device.

According to the method, the terminal device can learn of two sets of triggering conditions applicable to the first report and the second report, to avoid occurrence of a case in which the terminal device cannot identify timers respectively corresponding to the two sets of triggering conditions.

According to a second aspect, a communication method is provided. The method may be performed by a terminal device, may be performed by a component (for example, a processor, a chip, or a chip system) of the terminal device, or may be implemented by a logical module or software that can implement all or some functions of the terminal device. The method includes:

The terminal device receives second information, where the second information includes first information and third information, the first information indicates a first triggering condition, the first triggering condition is used to determine whether to record a first report, the first report includes information about a successful addition of a target secondary node by the terminal device or information about a successful change of the terminal device to the target secondary node, the third information indicates a second triggering condition, the second triggering condition is used to determine whether to record a second report, and the second report includes information about a successful handover of the terminal device to a target master node. The terminal device determines, based on the second information, whether to record the first report when a first timer runs, and the terminal device determines, based on the second information, whether to record the second report when a second timer runs.

Specifically, that the terminal device receives the second information may be: The target master node sends the second information to a source master node, and the source master node sends the second information to the terminal device, that is, the terminal device receives the second information.

Specifically, the third information may be determined by the target master node.

Specifically, the first report may be an SPR, and the second report may be an SHR.

According to the method, a triggering condition of recording of an SPR may be configured for the terminal device in a scenario in which a primary cell handover causes a primary secondary cell change.

With reference to the second aspect, in some implementations of the second aspect, that the terminal device determines, based on the second information, whether to record the first report when the first timer runs includes: When timing of the first timer reaches a first threshold, the terminal device determines to record the first report, where the first information includes information about the first threshold.

Specifically, the first timer is a T304 timer of the target secondary node.

For example, the first threshold may be a first ratio.

Specifically, when running time of the first timer is greater than or equal to the first threshold, the terminal device records the first report; or when a ratio of running duration of the first timer to configuration time of the first timer is greater than or equal to the first ratio, the terminal device records the first report.

With reference to the second aspect, in some implementations of the second aspect, that the terminal device determines, based on the second information, whether to record the second report when the second timer runs includes: When timing of the second timer reaches a second threshold, the terminal device determines to record the second report, where the third information includes information about the second threshold.

The second timer is a T304 timer of the target master node.

For example, the second threshold may be a second ratio.

Specifically, when running time of the second timer is greater than or equal to the second threshold, the terminal device records the second report; or when a ratio of running time of the second timer to configuration time of the second timer is greater than or equal to the second ratio, the terminal device records the second report.

With reference to the second aspect, in some implementations of the second aspect, the first information further indicates a third triggering condition, the third triggering condition is used to determine whether to record the first report, the third triggering condition includes: When timing of a third timer reaches a third threshold, the terminal device determines to record the first report, and the first information further includes information about the third threshold.

Specifically, the third timer may be a T310 timer or a T312 timer of the target secondary node.

For example, the third threshold may be a third ratio.

Specifically, when running time of the third timer is greater than or equal to the third threshold, the terminal device records the first report; or when a ratio of running time of the third timer to configuration time of the third timer is greater than or equal to the third ratio, the terminal device records the first report.

Optionally, the third information further includes the third triggering condition of recording of the first report.

Optionally, the source master node or a source secondary node may further determine, for the terminal device, the third triggering condition of recording of the first report.

With reference to the second aspect, in some implementations of the second aspect, the second information further indicates that the first triggering condition is associated with the first timer of a secondary node, and/or the second information further indicates that the second triggering condition is associated with the second timer of a master node.

Optionally, the second information further indicates that the third triggering condition is associated with the third timer of the secondary node.

Specifically, that the first triggering condition is associated with the first timer of the secondary node may be understood as that the first triggering condition has a mapping relationship with the first timer of the secondary node, or may be understood as that the first triggering condition is a triggering condition used to determine, when the first timer of the secondary node runs, whether to record the first report.

According to the method, two sets of triggering conditions applicable to the first report and the second report may be explicitly indicated to the terminal device, to avoid occurrence of a case in which the terminal device cannot identify timers respectively corresponding to the two sets of triggering conditions.

With reference to the second aspect, in some implementations of the second aspect, the first information is included in a first container, and the first container is generated by the target secondary node and provided to the target master node; and the third information is included in a second container, and the second container is generated by the target master node and provided to the terminal device.

According to the method, the terminal device can learn of two sets of triggering conditions applicable to the first report and the second report, to avoid occurrence of a case in which the terminal device cannot identify timers respectively corresponding to the two sets of triggering conditions.

With reference to the second aspect, in some implementations of the second aspect, the first information or the third information further indicates a third triggering condition, the third triggering condition is used to determine whether to record the first report, the third triggering condition includes: When timing of a third timer reaches a third threshold, the terminal device does not record the first report, and the first information or the third information further includes information about the third threshold.

Alternatively, when the terminal device determines that the third triggering condition is met, the terminal device adds first indication information to the first report, where the first indication information indicates a master node handover; and the terminal device sends the first report to a source master node.

According to the method, invalid optimization on a mobility parameter of the terminal device by the source node based on the first report can be avoided.

According to a third aspect, a communication method is provided. The method may be performed by a source master node, may be performed by a component (for example, a processor, a chip, or a chip system) of the source master node, or may be implemented by a logical module or software that can implement all or some functions of the source master node. The method includes:

A control plane CP of the source master node sends fourth information to a user plane UP of the source master node, where the fourth information indicates a plurality of pieces of data transfer information.

With reference to the third aspect, in some implementations of the third aspect, each of the plurality of pieces of data transfer information is data transfer information that corresponds to an UP of one target node and that uses one protocol data unit PDU session as a granularity, or data transfer information that corresponds to an UP of one target node and that uses one data radio bearer DRB as a granularity. This is not limited in this application. The UP of the target node may be a user plane UP of a target master node, or may be a user plane UP of a target secondary node. This is not limited in this application.

For example, the fourth information may include a data transfer information list.

Specifically, the fourth information may be carried in a bearer context modification request (bearer context modification request) message.

In another implementation, a control plane CP of the source master node sends a plurality of pieces of data transfer information to a user plane UP of the source master node for a plurality of times, and sends one piece of data transfer information each time.

With reference to the third aspect, in some implementations of the third aspect, each piece of data transfer information includes at least one piece of the following information:
uplink user transport layer information, downlink user transport layer information, quality of service flow information, and the like. User transport layer information includes a transport layer address, a tunnel endpoint identifier, indication information indicating whether to stop data transfer, and the like.

Based on the method, in a handover process, the source master node may simultaneously perform data transfer to a plurality of target nodes (for example, the target master node and the target secondary node), to improve data transfer efficiency in the handover process.

According to a fourth aspect, a communication apparatus is provided. The apparatus may be a target master node, may be a component (for example, a processor, a chip, or a chip system) of the target master node, or may be a logical module or software that can implement all or some functions of the target master node. The apparatus has a function of implementing the first aspect and the possible implementations of the first aspect. The function may be implemented by hardware, or may be implemented by hardware executing corresponding software. The hardware or the software includes one or more modules corresponding to the function.

In a possible design, the apparatus includes an interface unit and a processing unit. The interface unit may be at least one of a transceiver, a receiver, and a transmitter. The interface unit may include a radio frequency circuit or an antenna. The processing unit may be a processor. Optionally, the apparatus further includes a storage unit, and the storage unit may be, for example, a memory. When the apparatus includes the storage unit, the storage unit is configured to store a program or instructions. The processing unit is connected to the storage unit, and the processing unit may execute the program or the instructions stored in the storage unit or instructions from another source, to enable the apparatus to perform the communication method according to the first aspect and the possible implementations of the first aspect. In this design, the apparatus may be the target master node.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, to enable the chip in the terminal device to perform the communication method according to any one of the first aspect and the possible implementations of the first aspect. Optionally, the processing unit may execute the instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a fifth aspect, a communication apparatus is provided. The apparatus may be a terminal device, may be a component (for example, a processor, a chip, or a chip system) of the terminal device, or may be a logical module or software that can implement all or some functions of the terminal device. The apparatus has a function of implementing the second aspect and the possible implementations of the second aspect. The function may be implemented by hardware, or may be implemented by hardware executing corresponding software. The hardware or the software includes one or more modules corresponding to the function.

In a possible design, the apparatus includes: an interface unit. Optionally, the apparatus further includes a processing unit. The interface unit may be, for example, at least one of a transceiver, a receiver, and a transmitter. The interface unit may include a radio frequency circuit or an antenna. The processing unit may be a processor.

Optionally, the apparatus further includes a storage unit, and the storage unit may be, for example, a memory. When the apparatus includes the storage unit, the storage unit is configured to store a program or instructions. The processing unit is connected to the storage unit, and the processing unit may execute the program or the instructions stored in the storage unit, or instructions from another source, to enable the apparatus to perform the method according to the second aspect or any implementation of the second aspect.

In another possible design, when the apparatus is the chip, the chip includes: an interface unit. Optionally, the chip further includes a processing unit. The interface unit may be, for example, an input/output interface, a pin, or a circuit, on the chip. The processing unit may be, for example, a processor. The processing module may execute a program or instructions, to enable the chip in the terminal device to perform the communication method according to the second aspect and the possible implementations in the second aspect.

Optionally, the processing unit may execute the instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a sixth aspect, a communication apparatus is provided. The apparatus may be a source master node, may be a component (for example, a processor, a chip, or a chip system) of the source master node, or may be a logical module or software that can implement all or some functions of the source master node. The apparatus has a function of implementing the third aspect and the possible implementations of the third aspect. The function may be implemented by hardware, or may be implemented by hardware executing corresponding software. The hardware or the software includes one or more modules corresponding to the function.

In a possible design, the apparatus includes: an interface unit. Optionally, the apparatus further includes a processing unit. The interface unit may be, for example, at least one of a transceiver, a receiver, and a transmitter. The interface unit may include a radio frequency circuit or an antenna. The processing unit may be a processor.

Optionally, the apparatus further includes a storage unit, and the storage unit may be, for example, a memory. When the apparatus includes the storage unit, the storage unit is configured to store a program or instructions. The processing unit is connected to the storage unit, and the processing unit may execute the program or the instructions stored in the storage unit or instructions from another source, to enable the apparatus to perform the method according to the third aspect or any implementation of the third aspect.

In another possible design, when the apparatus is the chip, the chip includes: an interface unit. Optionally, the chip further includes a processing unit. The interface unit may be, for example, an input/output interface, a pin, or a circuit, on the chip. The processing unit may be, for example, a processor. The processing module may execute a program or instructions, to enable the chip in the terminal device to perform the communication method according to the third aspect and the possible implementations in the third aspect.

Optionally, the processing unit may execute the instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a seventh aspect, a computer storage medium is provided. The computer storage medium stores program code. The program code indicates instructions for performing the method according to any one of the first aspect, the second aspect, the third aspect, and the possible implementations of the first aspect, the second aspect, and the third aspect.

According to an eighth aspect, a computer program product including computer instructions or computer code is provided. When the computer program product runs on a computer, the computer is enabled to perform the method according to any one of the first aspect, the second aspect, the third aspect, and the possible implementations of the first aspect, the second aspect, and the third aspect.

According to a ninth aspect, a communication system is provided. The communication system includes an apparatus that has functions of implementing the method and various possible designs of the first aspect, and/or an apparatus that has functions of implementing the method and various possible designs of the second aspect, and/or an apparatus that has functions of implementing the method and various possible designs of the third aspect. The apparatus that has the functions of implementing the method and the possible designs of the first aspect may be a target master node, the apparatus that has the functions of implementing the method and the possible designs of the second aspect may be a terminal device, and the apparatus that has the functions of implementing the method and the possible designs of the third aspect may be a source master node.

Specifically, for beneficial effects of other aspects, refer to the beneficial effects described in the first aspect, the second aspect, and the third aspect.

### BRIEF DESCRIPTION OF DRAWINGS

FIG. 1 is a diagram of a network architecture according to an embodiment of this application;
FIG. 2 is a diagram of a protocol stack and network element modules of an access network device according to this application;
FIG. 3 is a diagram of an application scenario of DC;
FIG. 4 is a schematic flowchart of a communication method 400 according to this application;
FIG. 5 is a schematic flowchart of another communication method 500 according to this application;
FIG. 6 is a block diagram of a communication apparatus according to this application; and
FIG. 7 is a block diagram of a communication apparatus according to this application.

### DESCRIPTION OF EMBODIMENTS

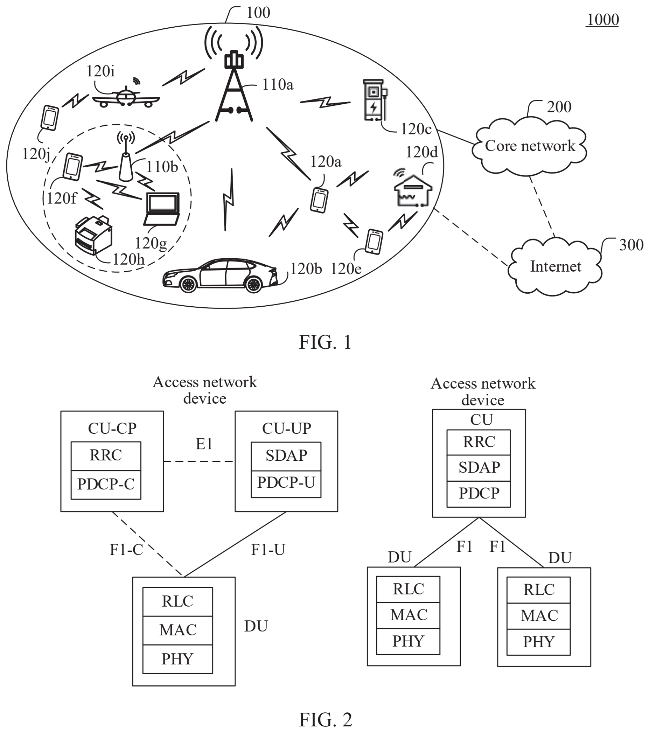

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is merely a diagram. The communication system may further include other network devices, for example, may further include a wireless relay device and a wireless backhaul device, which are not shown in FIG. 1.

The radio access network device is an access device used by the terminal device to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, or the like. The radio access network device may alternatively be a module or a unit that implements some functions of the base station, for example, may be a central unit (central unit, CU), or may be a distributed unit (distributed unit, DU).

FIG. 2 is a diagram of a protocol stack and network element modules of a radio access network device according to this application.

In a network structure, the radio access network device may include a CU node, a DU node, or a RAN device including the CU node and the DU node. The RAN device including the CU node and the DU node separates protocol layers of a gNB in an NR system. Functions of some protocol layers are controlled by the CU in a centralized manner. Functions of some or all remaining protocol layers are distributed in the DU, and the CU controls the DU in a centralized manner.

As shown in FIG. 2, a radio resource control (radio Resource Control, RRC) layer, a packet data convergence protocol (packet data convergence protocol, PDCP) layer, and a service data adaptation protocol (service data adaptation protocol, SDAP) layer in a protocol stack is deployed on the CU; and a radio link control (radio link control, RLC) layer, a medium access control (media access control, MAC) layer, and a physical layer (physical layer, PHY) in the protocol stack is deployed on the DU.

The CU has RRC, PDCP, and SDAP processing capabilities. The DU has RLC, MAC, and PHY processing capabilities.

It should be understood that the foregoing splitting (or division) of functions is merely an example, and does not constitute a limitation on the CU and DU in this application. In other words, there may be another function division manner between the CU and the DU. This is not limited in this embodiment of this application. In different systems, the CU (or a CU control plane (CU control plane, CU-CP) and a CU user plane (CU user plane, CU-UP)), the DU, or an RU may have also different names, but a person skilled in the art may understand meanings of the names. For example, in an open radio access network (open radio access network, ORAN) system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). For ease of description, the CU, the CU-CP, the CU-UP, and the DU are used as examples for description in this application. Any unit in the CU (or the CU-CP or the CU-UP) or the DU in this application may be implemented by using a software module, a hardware module, or a combination of the software module and the hardware module.

Functions of the CU may be implemented by one entity or different entities. For example, the functions of the CU may be further divided. For example, a control plane (control plane, CP) and a user plane (user plane, UP), namely, the control plane of the CU (CU-CP) and the user plane of the CU (CU-UP), are separated. The CU-CP and the CU-UP may be implemented by different function entities. The CU-CP and the CU-UP may be coupled to the DU to jointly implement functions of a network device. The CU-CP, the control plane of the CU, may be further of an architecture in which the CU-CP is further divided. To be specific, the CU-CP is further divided into a CU-CP 1 and a CU-CP 2.

In a possible manner, the CU-CP is responsible for a control plane function, and mainly includes RRC and PDCP-C. The PDCP-C is mainly responsible for data encryption and decryption, integrity protection, data transmission, and the like on the control plane. The CU-UP is responsible for a user plane function, and mainly includes SDAP and PDCP-U. The SDAP is mainly responsible for processing data of a core network and mapping a data flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP indicates that the gNB is connected to the core network through an Ng interface, and is connected to the DU through F1-C (control plane). The CU-UP is connected to the DU through F1-U (user plane). Certainly, in another possible implementation, the PDCP-C is alternatively in the CU-UP.

The radio access network device may be a macro base station (like 110a in FIG. 1), may be a micro base station or an indoor base station (like 110b in FIG. 1), or may be a relay node, a donor node, or the like. A specific technology and a specific device form that are used by the radio access network device are not limited in embodiments of this application. For ease of description, a network device is used as an abbreviation of the radio access network device, and the base station is used as an example of the radio access network device.

The terminal device is a device having a wireless transceiver function, and may send a signal to the base station, or receive a signal from the base station. The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, smart office, smart wearable, smart transportation, and a smart city. The terminal device may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal device are not limited in embodiments of this application.

The base station and the terminal device may be fixed or movable. The base station and the terminal device may be deployed on land, including an indoor or outdoor scenario and a handheld or vehicle-mounted scenario, or may be deployed on water, or may be deployed on an airplane, a balloon, and an artificial satellite. Application scenarios of the base station and the terminal device are not limited in embodiments of this application.

Roles of the base station and the terminal device may be relative. For example, a helicopter or an uncrewed aerial vehicle 120i in FIG. 1 may be configured as a mobile base station. For those terminal devices 120j accessing the radio access network 100 via 120i, the terminal device 120i is a base station. However, for the base station 110a, 120i is a terminal device, that is, communication between 110a and 120i is performed based on a radio air interface protocol. Certainly, communication between 110a and 120i may alternatively be performed based on an interface protocol between base stations. In this case, for 110a, 120i is also a base station. Therefore, the base station and the terminal device may be collectively referred to as a communication apparatus, 110a and 110b in FIG. 1 may be referred to as a communication apparatus having a base station function, and 120a to 120j in FIG. 1 may be referred to as a communication apparatus having a terminal device function.

Communication between the base station and the terminal device, between the base stations, and between the terminal devices may be performed through a licensed spectrum, an unlicensed spectrum, or both the licensed spectrum and the unlicensed spectrum, which may be performed through a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the base station function. The control subsystem including the base station function herein may be a control center in the foregoing application scenarios, such as a smart grid, industrial control, smart transportation, and a smart city. A function of the terminal device may alternatively be performed by a module (for example, a chip or a modem) in the terminal device, or may be performed by an apparatus including the terminal device function.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. The cell that establishes the wireless connection with the terminal device is referred to as a serving cell of the terminal device. When the terminal device communicates with the serving cell, the terminal device is further interfered by a signal from a neighboring cell.

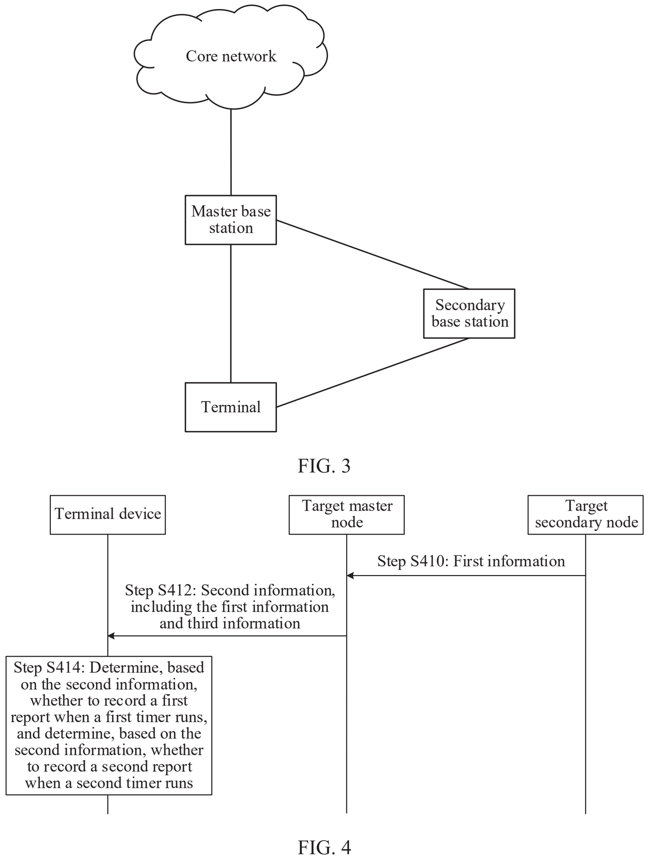

In dual connectivity (dual connectivity, DC), one terminal device may communicate with a plurality of base stations, and a network side may provide a communication service for the terminal device by using resources of the plurality of base stations. For example, FIG. 3 is a diagram of an application scenario of DC. As shown in FIG. 3, in the DC, a base station that has control plane signaling interaction with a core network is referred to as a master base station, and another base station is referred to as a secondary base station. The master base station may also be referred to as a master node (master node, MN), and the secondary base station may also be referred to as a secondary node (secondary node, SN).

In the DC, the plurality of base stations may be base stations of a same radio access technology (radio access technology, RAT), for example, all the base stations are 4th generation (4th generation, 4G) base stations, or all the base stations are 5th generation (5th generation, 5G) base stations. In the DC, the plurality of base stations may alternatively be base stations of different RATs. Such DC is referred to as multi-RAT dual connectivity (multi-RAT dual connectivity, MR-DC). For example, one base station is a 4G base station, and another base station is a 5G base station. A 4G RAT is also referred to as evolved universal terrestrial radio access (evolved universal terrestrial radio access, E-UTRA), and a 5G RAT is also referred to as NR. MR-DC includes E-UTRA and NR DC (E-UTRA-NR DC, EN-DC), E-UTRA and NR DC (NG-RAN E-UTRA-NR DC, NGEN-DC) of NG-RAN, NR and E-UTRA DC (NR-E-UTRA DC, NE-DC), and NR and NR DC (NR-NR DC, NR-DC). In the EN-DC, a master base station connected to a 4G core network is an LTE base station eNB, and a secondary base station is an NR base station gNB. In the NGEN-DC, a master base station connected to a 5G core network (5G core, 5GC) is an LTE base station ng-eNB, and a secondary base station is an NR base station gNB. In the NE-DC, a master base station connected to a 5GC is an NR base station gNB, and a secondary base station is an LTE base station ng-eNB. In the NR-DC, a master base station connected to a 5GC is an NR base station gNB, and a secondary base station is an NR base station gNB.

In the DC, the secondary base station may directly send, to the terminal device, a radio resource control (radio resource control, RRC) message generated by the secondary base station. Correspondingly, the terminal device may directly send an RRC message to the secondary base station. Alternatively, the secondary base station may notify the master base station of an RRC message generated by the secondary base station, and then the master base station sends the RRC message to the terminal device. Correspondingly, the terminal device may send an RRC message to the secondary base station through the master base station.

For ease of understanding, the following describes some terms used in embodiments of this application.

### 1. Handover (handover)

In a conventional handover procedure in a mobile communication network, mobility management of a terminal device in a connected mode is controlled by a network device. To be specific, the network device sends a handover message, to indicate, to the terminal device, a target cell to which the terminal device is to be handed over and how to perform the handover. Specifically, after receiving the handover message sent by the network device, the terminal device may access the target cell based on content included in the handover message.

### 2. Conditional handover (conditional handover, CHO)

To improve a success rate of a handover of a terminal device between different cells, a CHO procedure is provided. To be specific, when source link quality is good, a source base station sends conditional handover configuration information to the terminal device. The conditional handover configuration information may include a triggering parameter of a handover condition and information about one or more candidate cells. The information about the candidate cell includes one or more pieces of information, for example, a cell global identifier (cell global identifier, CGI) of the candidate cell, a physical cell identifier (physical cell identifier, PCI) of the candidate cell and frequency information corresponding to the candidate cell, a cell radio network temporary identifier (cell radio network temporary identifier, C-RNTI) allocated by a target cell to the terminal device, and random access channel (random access channel, RACH) resource information (for example, dedicated RACH resource information and/or common RACH resource information) required for accessing the target cell. After receiving the foregoing handover message, the terminal device measures, based on the configuration information, whether cell quality of the candidate cell meets a handover triggering condition, and uses a candidate cell that meets the handover triggering condition as the target cell. The terminal device performs a random access procedure with the target cell. When random access succeeds, the terminal device sends an RRC reconfiguration complete message to a base station to which the target cell belongs, to notify the target base station that the conditional handover is completed.

### 3. Cell (cell)

The cell is described from a perspective of resource management, mobility management, or a service unit. A coverage area of each access network device may be divided into one or more cells, and the cell may be considered as including a specific frequency domain resource. The cell may be a region within a coverage area of a wireless network of the access network device. In embodiments of this application, different cells may correspond to different access network devices. For example, an access network device to which a cell #1 belongs and an access network device to which a cell #2 belongs may be different access network devices, for example, base stations. In other words, the cell #1 and the cell #2 may be managed by different base stations. The access network device to which the cell #1 belongs and the access network device to which the cell #2 belongs may alternatively be different radio frequency processing units of a same base station, for example, radio remote units (radio remote units, RRUs). In other words, the cell #1 and the cell #2 may be managed by the same base station and have a same baseband processing unit and a same intermediate frequency processing unit, but have different radio frequency processing units. This is not particularly limited in this application.

A cell handover is a handover that needs to be performed in a wireless communication system to maintain uninterrupted communication of a terminal device when the terminal device moves from a cell to another cell. In this application, a source cell represents a cell that provides a service for the terminal device before the handover, and a target cell represents a cell that provides a service for the terminal device after the handover (for example, a candidate primary cell (primary cell, PCell) selected by the terminal device in a CHO procedure, and/or a candidate PSCell selected by the terminal device in a CPAC procedure). In other words, the source cell is a serving cell before the terminal device performs cell handover, and the target cell is a serving cell after the terminal device performs cell handover. It should be understood that the cell is the coverage area of the access network device, the source cell corresponds to a source access network device, and the target cell corresponds to a target access network device. In this application, the source access network device includes, for example, a source master node (source MN, S-MN) or a source secondary node (source SN, S-SN), and the target access network device includes, for example, a target master node (target MN, T-MN) or a target secondary node (target SN, T-SN). In addition, when both the CHO procedure and the CPAC procedure are performed, an access network device to which a candidate cell for a CHO belongs may be referred to as a candidate master node (candidate MN, C-MN), and an access network device to which a candidate primary secondary cell of a CPAC belongs may be referred to as a candidate secondary node (candidate SN, C-SN). It may be understood that, in the CHO procedure and the CPAC procedure, a quantity of candidate nodes (C-MNs or C-SNs) may be an integer greater than or equal to 1. This is not limited in embodiments of this application.

### 4. Primary cell (primary cell, PCell)

The PCell is a cell operating on a primary carrier. A terminal device establishes an initial connection process or starts a connection re-establishment process in the PCell. In a handover process, the cell is indicated as the PCell.

A cell group in which an MN in MR-DC provides a service for the terminal device may be referred to as a master cell group (master cell group, MCG). When there is only one cell in the MCG, the cell is a PCell of the terminal device.

### 5. Primary secondary cell (primary secondary cell, PSCell)

A cell group in which an SN in MR-DC provides a service for a terminal device may be referred to as a secondary cell group (secondary cell group, SCG). When there is only one cell in the SCG, the cell is a main PSCell of the terminal device. The primary secondary cell is a cell in which the terminal device may be indicated to perform random access or initial physical uplink shared channel (physical uplink shared channel, PUSCH) transmission (for example, a random access procedure is omitted in an SCG change procedure).

### 6. Secondary cell (secondary cell, SCell)

The secondary cell is a cell operating on a secondary carrier. Once an RRC connection is established, the SCell may be configured to provide an additional radio resource. In an MR-DC scenario, all cells except a PCell in an MCG and a PSCell in an SCG may be referred to as SCells.

### 7. Conditional primary secondary cell addition/change (conditional PSCell addition/change, CPAC)

In an MR-DC scenario, an access network device side triggers a primary secondary cell (primary SCG cell, PSCell) addition, and the PSCell addition is triggered by a master node. Usually, due to mobility of a terminal device, the access network device side triggers a PSCell change (that is, the access network device side indicates the terminal device to perform a handover from one PSCell to another PSCell). The PSCell change may be triggered by an MN, or may be triggered by an SN.

For example, the access network device side learns, based on a measurement result of the terminal device, that signal quality of one PSCell becomes worse and signal quality of another PSCell becomes better. The access network device side indicates the terminal device to perform a PSCell change. The PSCell change may be that the terminal device performs a handover from a PSCell of an SN to a PSCell of another SN, or may be that the terminal device performs a handover from a PSCell of an SN to another PSCell of the SN.

An addition or a change of a single primary secondary cell may be referred to as a PSCell addition/change (PAC), and a combination of a CHO technology and a PAC technology may be referred to as a CPAC, that is, the CHO technology is used in the PSCell addition or change.

Similar to the CHO technology, a trigger node (the MN or the SN) prepares a plurality of candidate PSCells in advance, and sends information about the candidate PSCells, measurement configuration information, and a handover triggering condition to the terminal device. After the terminal device receives CPAC configuration information, when a candidate PSCell meets a handover triggering condition, the terminal device uses the candidate PSCell as a target cell and performs a PSCell addition or change procedure.

### 8. T304 timer

Running duration of the T304 timer is duration from time when the terminal device receives an RRC reconfiguration message to time when the terminal device successfully completes random access to a target cell. Specifically, the terminal device starts the T304 timer when receiving the RRC reconfiguration message, and the terminal device stops the T304 timer after completing random access to the target cell.

In addition, in a PCell handover process, if the running duration of the T304 timer is greater than or equal to a threshold #1, the terminal device considers that there is a potential possibility of a handover failure, and the terminal device triggers recording of a successful handover report (successful handover report, SHR). Further, if the running duration of the T304 timer is greater than or equal to a threshold #2, the terminal device determines that the handover failure occurs. The threshold #2 herein may be greater than the threshold #1.

### 9. T310 timer

Running duration of the T310 timer is duration from time when the terminal device detects that there is a physical layer problem between the terminal device and a source cell to time when the terminal device detects that a radio link is recovered. Specifically, the terminal device starts the T310 timer when detecting that there is the physical layer problem (for example, out-of-synchronization between the terminal device and the source cell) between the terminal device and the source cell, and the terminal device stops the T310 timer when detecting that the radio link is recovered.

In addition, in a PCell handover process, if the running duration of the T310 timer is greater than or equal to a threshold #3, the terminal device considers that there is a potential possibility of a radio link failure, and the terminal device triggers recording of an SHR. Further, if the running duration of the T310 timer is greater than or equal to a threshold #4, the terminal device determines that the radio link failure occurs. The threshold #4 herein may be greater than the threshold #3.

### 10. T312 Timer

The T312 timer is started during running of the T310 timer. Running duration of the T312 timer is duration from time when the terminal device triggers a measurement report to time when the terminal device recovers synchronization with a source cell. Specifically, the terminal device starts the T312 timer when the T310 timer runs and the terminal device sends the measurement report, and stops the T312 timer when the terminal device recovers synchronization with the source cell. In addition, in a PCell handover process, if the running duration of the T312 timer is greater than or equal to a threshold #5, the terminal device considers that there is a potential possibility of a radio link failure, and the terminal device triggers recording of an SHR. Further, if the running duration of the T312 timer is greater than or equal to a threshold #6, the terminal device determines that the radio link failure occurs. The threshold #6 herein may be greater than the threshold #5.

In a successful PCell handover process, the terminal device records an SHR according to a configuration of a network side. The network side configures a triggering condition for UE, and delivers the triggering condition to the UE by using an RRC reconfiguration message sent by a source node to the UE. Recording of the SHR may be triggered because a timing result of one or more timers of the T304, the T310, and the T312 reaches a specific threshold or an RLF occurs in the source cell during DAPS. Similarly, during a PSCell addition or change, when a triggering condition is met, the terminal device triggers recording of a successful PSCell report (successful PSCell report, SPR).

It should be noted that, in a PSCell addition scenario, there is no source PSCell. Therefore, there is no T310 timer or T312 timer.

Generally, the terminal device sends the recorded SHR to an S-MN or a T-MN, and the S-MN or the T-MN may optimize a mobility parameter of a primary cell of the terminal device with reference to information about the SHR; or the terminal device sends the recorded SPR to an S-MN, an S-SN, or a T-SN, and the S-MN, the S-SN, or the T-SN may optimize a mobility parameter of a primary secondary cell of the terminal device with reference to information about the SPR.

Currently, a PCell handover may cause a PSCell addition or change, and the PCell handover may be a basic handover or a CHO handover. On a terminal device side, if an S-SN is configured, the PCell handover may cause the PSCell change; or if no S-SN is configured, the PCell handover may cause the PSCell addition. In either case, the T-MN determines to add or change a PSCell in the PCell handover process. In a process in which the PCell handover process causes the PSCell addition or change, a mechanism for determining and sending, for a terminal device, a triggering condition of recording of an SPR is unclear. Therefore, this application provides a communication method 400, to resolve how to configure a triggering condition of recording of an SPR for a terminal device in a scenario in which a PCell handover causes a PSCell change, as shown in FIG. 4. The communication method 400 includes at least two implementations.

A first implementation is as follows.

Step S410: A target secondary node T-SN sends first information to a target master node T-MN. Correspondingly, the target master node receives the first information from the target secondary node.

Specifically, the first information indicates a first triggering condition, and the first triggering condition is used to determine whether to record a first report. The first report includes information about a successful addition of the target secondary node by a terminal device or information about a successful change of the terminal device to the target secondary node. For example, the first report may be the foregoing SPR.

The target master node may be a target master node of a basic handover, or may be one or more candidate master nodes of a CHO handover.

Specifically, the first information includes information about a first threshold, and the first threshold is used by the terminal device to determine whether to record the first report when a first timer runs.

For example, the first threshold may be a first ratio.

For example, the first timer is a T304 timer that is of the target secondary node and that is maintained by the terminal device. Further, the T304 timer of the target secondary node is a T304 timer of a target cell. Configuration time of the T304 timer of the target secondary node is 15 ms. It is assumed that the first threshold is 10 ms. When running time of the T304 timer of the target secondary node is greater than or equal to 10 ms, the terminal device is triggered to record the first report. Alternatively, it is assumed that the first ratio is 80%. When a ratio of running time of the T304 timer of the target secondary node to the configuration time of the T304 timer is greater than or equal to 80%, the terminal device is triggered to record the first report, that is, when the running time of the T304 timer of the target secondary node is greater than or equal to 12 ms, the terminal device is triggered to record the first report.

Optionally, the first information further indicates a third triggering condition, and the third triggering condition is used to determine whether to record the first report. The first information further includes information about a third threshold, and the third threshold is used by the terminal device to determine whether to record the first report when a third timer runs.

For example, the third threshold may be a third ratio.

For example, the third timer is the T310 timer or the T312 timer that is of the target secondary node and that is maintained by the terminal device, and configuration time of the T310 timer or the T312 timer of the target secondary node is 8 ms. The third threshold is 5 ms. When running time of the T310 timer or the T312 timer of the target secondary node is greater than or equal to 5 ms, the terminal device is triggered to record the first report. Alternatively, the third ratio is 50%. When a ratio of running time of the T310 timer or the T312 timer of the target secondary node to the configuration time of the T310 timer or the T312 timer is greater than or equal to 50%, the terminal device is triggered to record the first report, that is, when the running time of the T310 timer or the T312 timer of the target secondary node is greater than or equal to 4 ms, the terminal device is triggered to record the first report.

Specifically, the target secondary node is determined by the target master node for the terminal device.

Step S412: The target master node sends second information to the terminal device. Correspondingly, the terminal device receives the second information from the target master node.

Specifically, the target master node may first send the second information to a source master node, and the source master node sends the second information to the terminal device.

Specifically, the second information includes the first information and third information, the third information is determined by the target master node, the third information indicates a second triggering condition, the second triggering condition is used to determine whether to record a second report, and the second report includes information about a successful handover of the terminal device to the target master node. For example, the second report may be the foregoing SHR.

Specifically, the third information includes a second threshold, and the second threshold is used by the terminal device to determine whether to record the second report when a second timer runs.

For example, the second threshold may be a second ratio.

For example, the second timer is the T304 timer that is of the target master node and that is maintained by the terminal, and configuration time of the T304 timer of the target master node is 12 ms. The second threshold is 8 ms. When running time of the T304 timer of the target master node is greater than or equal to 8 ms, the terminal device is triggered to record the second report. Alternatively, the second ratio is 60%. When a ratio of running time of the T304 timer of the target master node to the configuration time of the T304 timer is greater than or equal to 60%, the terminal device is triggered to record the second report, that is, when the running time of the T304 timer of the target master node is greater than or equal to 7.2 ms, the terminal device is triggered to record the first report.

Optionally, the third information further indicates the third triggering condition.

Step S414: The terminal device determines, based on the received second information, whether to record the first report when the first timer runs, and the terminal device determines, based on the received second information, whether to record the second report when the second timer runs.

Optionally, the terminal device determines, based on the received second information, whether to record the first report when the third timer runs.

A second implementation of the communication method 400 is as follows.

Step S410: A target secondary node T-SN sends first information to a target master node T-MN. Correspondingly, the target master node receives the first information from the target secondary node. Specifically, the first information indicates the third triggering condition.

Optionally, the first information further indicates the first triggering condition.

Step S412: The target master node sends second information to a terminal device. Correspondingly, the terminal device receives the second information from the target master node.

Specifically, the target master node may first send the second information to a source master node, and the source master node sends the second information to the terminal device.

Specifically, the second information includes the first information or the third information, the third information is determined by the target master node, and the third information indicates the third triggering condition.

Optionally, the third information further indicates the second triggering condition.

Step S414: The terminal device determines, based on the received second information, whether to record the first report when a third timer runs.

Optionally, the terminal device determines, based on the received second information, whether to record the first report when a first timer runs.

Optionally, the terminal device determines, based on the received second information, whether to record the second report when a second timer runs.

For related explanations of the second implementation of the communication method 400, refer to the first implementation of the communication method 400. Details are not described herein again.

According to the communication method 400, in a scenario in which a primary cell handover causes a primary secondary cell change, a triggering condition of recording of an SPR may be configured for the terminal device, so that the terminal device records information about a current PSCell addition or change process, thereby helping a network side optimize a mobility parameter of the primary secondary cell of the terminal device.

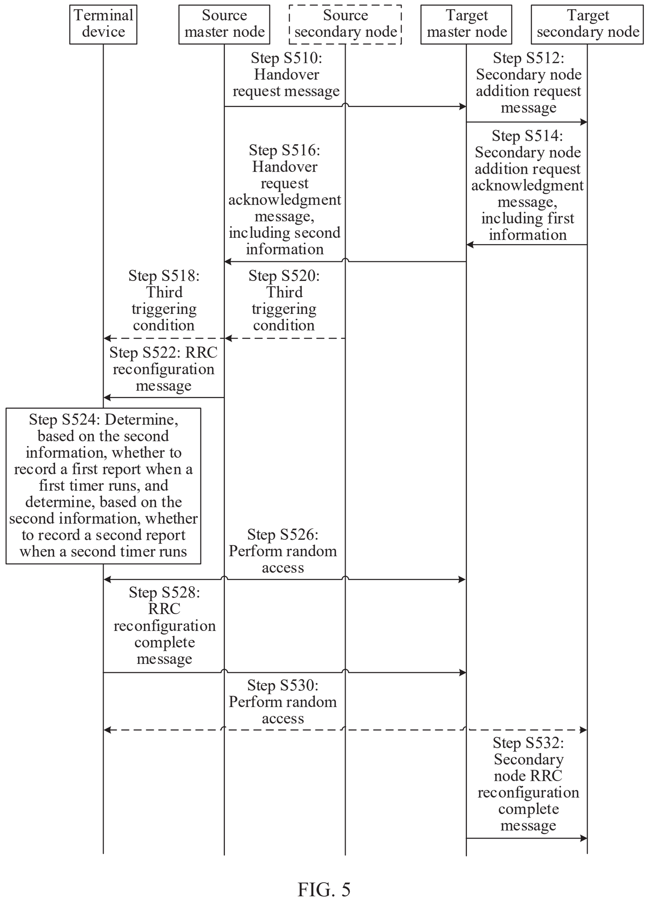

For ease of understanding the technical solutions of this application, the following describes the communication method 400 in more detail with reference to a specific handover scenario, as shown in FIG. 5.

Specifically, the technical solution shown in FIG. 5 is not only applicable to a basic handover scenario, but also applicable to a CHO scenario. This is not limited in this application.

Step S510: During a PCell handover, a source master node sends a handover request message to a target master node. Correspondingly, the target master node receives the handover request message from the source master node.

Specifically, a terminal device may be in dual connectivity, that is, a secondary station is configured, or the secondary station may not be configured. The source master node sends the handover request message to the target master node.

Specifically, in the basic handover scenario, the source master node sends the handover request message to the target master node. In the CHO scenario, the source master node sends the handover request message to a plurality of candidate target master nodes, and indicates, in the handover request message, that a current handover is a CHO.

For convenience, the target master node and the plurality of candidate target master nodes are collectively referred to as the target master node below.

Step S512: The target master node determines to configure a target secondary node for the terminal device, and sends a secondary node addition request message to the target secondary node.

Specifically, if the target master node determines to initiate a basic primary secondary cell addition/change, the target master node sends the secondary node addition request message to the target secondary node. If the target master node determines to initiate a conditional primary secondary cell addition/change, the target master node sends a conditional secondary node addition request message to at least one candidate target secondary node.

Optionally, the secondary node addition request message may alternatively be replaced with a secondary node change request message.

For convenience, the target secondary node and the at least one candidate target secondary node are collectively referred to as the target secondary node below.

Step S514: If the target secondary node allows access of the terminal device, the target secondary node sends a secondary node addition request acknowledgment message to the target master node.

Optionally, if the target secondary node allows access of the terminal device, the target secondary node sends a secondary node change request acknowledgment message to the target master node.

Specifically, the secondary node addition request acknowledgment message includes the first information.

Optionally, the secondary node addition request message indicates the third triggering condition.

Step S516: The target master node sends a handover request acknowledgment message to the source master node.

Specifically, the handover request acknowledgment message includes the second information. The second information includes the first information and the third information. The third information is determined by the target master node.

Optionally, the third information indicates the third triggering condition.

Optionally, the third triggering condition may alternatively be indicated by the source master node or a source secondary node to the terminal device, or may be indicated by the source master node or the source secondary node to the terminal device. As shown in step S518 or step S520 shown in FIG. 5, the third triggering condition is sent to the terminal device in step S518 or step S520 before the terminal device performs a PCell handover and a PSCell change, or may be sent to the terminal device in step S518 or step S520 before the terminal device performs random access to a PCell and a PSCell.

Based on the foregoing solution, the second information may indicate the first triggering condition and the second triggering condition. The terminal device cannot distinguish whether the first triggering condition is used to trigger recording of the first report or trigger recording of the second report. Similarly, the terminal device cannot distinguish whether the second triggering condition is used to trigger recording of the first report or trigger recording of the second report.

Based on this, in an implementation, the second information further indicates that the first triggering condition is associated with the first timer of a secondary node, and/or the second information further indicates that the second triggering condition is associated with the second timer of a master node.

Specifically, that the first triggering condition is associated with the first timer of the secondary node and that the second triggering condition is associated with the second timer of the master node may be separately indicated, or may be jointly indicated. This is not limited in this application.

Optionally, the second information further indicates that the third triggering condition is associated with the third timer of the secondary node.

Specifically, that the first triggering condition is associated with the first timer of the secondary node may be understood as that the first triggering condition has a mapping relationship with the first timer of the secondary node.

In another implementation, the target secondary node generates a first container and provides the first container to the target master node, where the first container includes the first information, and the first container may further include air interface configuration information of an SCG corresponding to the target secondary node (a target primary secondary cell/a candidate primary secondary cell). The target master node generates a second container and provides the second container to the terminal device, where the second container includes the third information, and the second container may further include air interface configuration information of an MCG corresponding to the target master node (a target primary cell) and the first container.

Step S522: The source master node sends an RRC reconfiguration message to the terminal device.

Specifically, the RRC reconfiguration message includes the second information.

Alternatively, the second information may be sent to the terminal device before the source master node sends the RRC reconfiguration message to the terminal device. This is not limited in this application.

Specifically, the RRC reconfiguration message further includes the air interface configuration information of the MCG corresponding to the target primary cell and the air interface configuration information of the SCG corresponding to the target primary secondary cell.

Step S524: The terminal device determines, based on the received second information, whether to record the first report when the first timer runs, and the terminal device determines, based on the received second information, whether to record the second report when the second timer runs.

Optionally, the terminal device determines, based on the received second information, whether to record the first report when the third timer runs.

Step S526: After receiving the RRC reconfiguration message, the terminal device performs a random access process with the target master node.

Step S528: After successfully accessing the target master node, the terminal device sends an RRC reconfiguration complete message to the target master node.

Optionally, step S530: After receiving the RRC reconfiguration message, the terminal device performs a random access process with the target secondary node.

Step S532: The target master node sends a secondary node RRC reconfiguration complete message to the target secondary node after the terminal device successfully accesses the target secondary node.

Specifically, a sequence of performing step S524 to step S532 is not limited in this application. For example, step S524 may be performed in a process of performing step S526 to step S532.

In the foregoing PCell handover process, a T-MN determines to add or change a PSCell, and an S-MN does not participate in a decision of adding or changing the PSCell. Therefore, the S-MN or an S-SN cannot optimize a mobility parameter of the PSCell addition or change. Therefore, sending, by the terminal device, the recorded SHR or SPR to the S-MN or S-SN is invalid.

Based on this, in an implementation, the terminal device learns that a handover of the target secondary node is determined by the target master node. When the terminal device determines that the third triggering condition is met, the terminal device does not record the first report.

In another implementation, the terminal device learns that a handover of the target secondary node is determined by the target master node. When the terminal device determines that the third triggering condition is met, the terminal device records the first report, but the terminal device includes first indication information in the first report sent to the source node, where the first indication information indicates a master node handover.

In the foregoing two manners, the source node can avoid invalid optimization of the mobility parameter.

In the foregoing handover process, the source master node receives a plurality of data transfer addresses from a plurality of target master nodes, where each data transfer address corresponds to an UP of one target node, for example, a target master node or a target secondary node. After the source master node receives the plurality of data transfer addresses, a CU-CP of the source master node can provide, for a CU-UP at a time, data transfer information corresponding to an UP of one target node.

Based on this, in this application, the CU-CP of the source master node sends a plurality of pieces of data transfer information to the CU-UP of the source master node in a bearer context modification request (bearer context modification request) message. In an implementation, the CU-CP of the source master node provides a data transfer information list in one bearer context modification request (bearer context modification request) message. In another implementation, the CU-CP of the source master node includes a plurality of pieces of data transfer information in a plurality of bearer context modification request (bearer context modification request) messages, and sends the plurality of pieces of data transfer information to the CU-UP of the source master node by sending the plurality of bearer context modification request (bearer context modification request) messages, where one piece of data transfer information is carried in each sent bearer context modification request (bearer context modification request) message, and the one piece of data transfer information corresponds to one target UP.

Specifically, the data transfer information includes uplink user transport layer information, downlink user transport layer information, quality of service flow (quality of service flows, QoS flow) information, and the like. User transport layer information includes a transport layer address, a tunnel endpoint identifier, and indication information indicating whether to stop data transfer.

Specifically, the provided data transfer address list is to provide data transfer information corresponding to a plurality of target UPs at a granularity of each protocol data unit (protocol data unit, PDU) session or at a granularity of each data radio bearer (data radio bearer, DRB).

In the foregoing manner, in a handover process, the source master node supports data transfer to a plurality of target nodes based on the plurality of pieces of data transfer information.

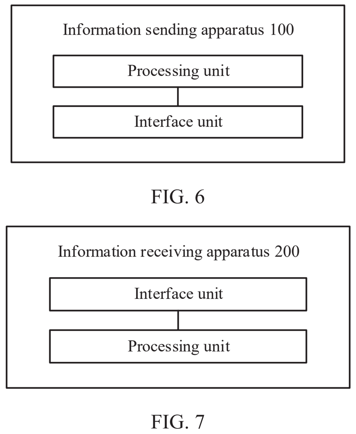

FIG. 6 is a block diagram of an information sending apparatus 100 according to an embodiment of this application. The information sending apparatus 100 may correspond to (for example, may be configured as or may be) the target secondary node, the target master node, the source master node, the source secondary node, and the terminal device described in embodiments of FIG. 4 and FIG. 5. Modules or units in the information sending apparatus 100 are separately configured to perform actions or processing processes performed by the target secondary node, the target master node, the source master node, the source secondary node, and the terminal device described in embodiments in FIG. 4 and FIG. 5. To avoid repetition, detailed descriptions thereof are omitted herein.

In this embodiment of this application, the apparatus 100 may be the target secondary node, the target master node, the source master node, the source secondary node, and the terminal device described in embodiments of FIG. 4 and FIG. 5. In this case, the apparatus 100 may include a processor and a transceiver, and the processor is communicatively connected to the transceiver.

Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to send information or a signal.

In this case, an interface unit in the apparatus 100 shown in FIG. 6 may correspond to the transceiver, and a processing unit in the apparatus 100 shown in FIG. 6 may correspond to the processor.

In this embodiment of this application, the apparatus 100 may be a chip (or a chip system) installed in the target secondary node, the target master node, the source master node, the source secondary node, and the terminal device described in embodiments of FIG. 4 and FIG. 5. In this case, the apparatus 100 may include: a processor and an input/output interface. The processor may be communicatively connected to a transceiver of the target secondary node, the target master node, the source master node, the source secondary node, and the terminal device described in embodiments in FIG. 4 and FIG. 5 through the input/output interface. Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to send information or a signal.

In this case, an interface unit in the apparatus 100 shown in FIG. 6 may correspond to the input/output interface, and a processing unit in the apparatus 100 shown in FIG. 6 may correspond to the processor.

FIG. 7 is a block diagram of an information receiving apparatus 200 according to an embodiment of this application. The information receiving apparatus 200 may correspond to (for example, may be configured to implement) the target secondary node, the target master node, the source master node, the source secondary node, and the terminal device described in embodiments of FIG. 4 and FIG. 5. Modules or units in the information receiving apparatus 200 are separately configured to perform actions or processing processes performed by the target secondary node, the target master node, the source master node, the source secondary node, and the terminal device described in embodiments in FIG. 4 and FIG. 5. To avoid repetition, detailed descriptions thereof are omitted herein.

In this embodiment of this application, the apparatus 200 may be the target secondary node, the target master node, the source master node, the source secondary node, and the terminal device described in embodiments of FIG. 4 and FIG. 5. In this case, the apparatus 200 may include a processor and a transceiver, and the processor is communicatively connected to the transceiver. Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to receive information or a signal.

In this case, an interface unit in the apparatus 200 shown in FIG. 7 may correspond to the transceiver, and a processing unit in the apparatus 200 shown in FIG. 7 may correspond to the processor.

In this embodiment of this application, the apparatus 200 may be a chip (or a chip system) installed in the target secondary node, the target master node, the source master node, the source secondary node, and the terminal device described in embodiments of FIG. 4 and FIG. 5. In this case, the apparatus 200 may include: a processor and an input/output interface. The processor may be communicatively connected to a transceiver of the target secondary node, the target master node, the source master node, the source secondary node, and the terminal device described in embodiments in FIG. 4 and FIG. 5 through the input/output interface. Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to receive information or a signal.

In this case, an interface unit in the apparatus 200 shown in FIG. 7 may correspond to the input interface, and a processing unit in the apparatus 200 shown in FIG. 7 may correspond to the processor.

A person of ordinary skill in the art may be aware that, in combination with the examples described in embodiments disclosed in this specification, units and algorithm steps can be implemented by electronic hardware or a combination of computer software and the electronic hardware. Whether the functions are performed by hardware or software depends on particular applications and design constraint conditions of the technical solutions. A person skilled in the art may use different methods to implement the described functions for the particular applications, but it should not be considered that the implementation goes beyond the scope of this application.

It may be clearly understood by a person skilled in the art that, for the purpose of convenient and brief description, for a detailed working process of the foregoing system, apparatus, and unit, refer to the corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a target master node, first information from a target secondary node, wherein the first information indicates a first triggering condition, the first triggering condition is used to determine whether to record a first report, and the first report comprises information about a successful addition of the target secondary node by a terminal device or information about a successful change of the terminal device to the target secondary node; and
sending, by the target master node, second information to the terminal device, wherein the second information comprises the first information and third information, the third information indicates a second triggering condition, the second triggering condition is used to determine whether to record a second report, and the second report comprises information about a successful handover of the terminal device to the target master node.

2. The method according to claim 1, wherein the first information comprises information about a first threshold, and the first triggering condition comprises:
when timing of the first timer reaches the first threshold, recording the first report, wherein the first timer is a T304 timer of the target secondary node.

3. The method according to claim 1, wherein the third information comprises information about a second threshold, and the second triggering condition comprises:
when timing of the second timer reaches the second threshold, the second report is recorded, wherein the second timer is a T304 timer of the target master node.

4. The method according to any one of claims 1 to 3, wherein the first information further indicates a third triggering condition, the third triggering condition is used to determine whether to record the first report, the third triggering condition comprises:
when timing of a third timer reaches a third threshold, recording the first report, wherein the third timer is either a T310 timer or a T312 timer of the target secondary node, and
the first information further comprises information about the third threshold.

5. The method according to any one of claims 1 to 4, wherein the third information further indicates the third triggering condition, the third triggering condition is used to determine whether to record the first report, the third triggering condition comprises:
when the timing of the third timer reaches the third threshold, recording the first report, wherein the third timer is either the T310 timer or the T312 timer of the target secondary node, and
the third information further comprises the information about the third threshold.

6. The method according to any one of claims 2 to 5, wherein the second information further indicates that the first triggering condition is associated with the first timer of a secondary node, and/or the second information further indicates that the third triggering condition is associated with the third timer of the secondary node, and/or the second information further indicates that the second triggering condition is associated with the second timer of a master node.

7. The method according to any one of claims 2 to 6, wherein the first information is comprised in a first container, the first container is generated by the target secondary node and provided to the target master node, the third information is comprised in a second container, and the second container is generated by the target master node and provided to the terminal device.

8. A communication method, wherein the method comprises:
receiving, by a terminal device, second information, wherein the second information comprises first information and third information, the first information indicates a first triggering condition, the first triggering condition is used to determine whether to record a first report, the first report comprises information about a successful addition of a target secondary node by the terminal device or information about a successful change of the terminal device to the target secondary node, the third information indicates a second triggering condition, the second triggering condition is used to determine whether to record a second report, and the second report comprises information about a successful handover of the terminal device to the target master node; and
determining, by the terminal device based on the second information, whether to record the first report when a first timer runs, and determining, by the terminal device based on the second information, whether to record the second report when the second timer runs.

9. The method according to claim 8, wherein the first information comprises information about a first threshold, and the first triggering condition comprises:
when timing of the first timer reaches the first threshold, recording the first report, wherein the first timer is a T304 timer of the target secondary node.

10. The method according to claim 8, wherein the third information comprises information about a second threshold, and the second triggering condition comprises:
when timing of the second timer reaches the second threshold, the second report is recorded, wherein the second timer is a T304 timer of the target master node.

11. The method according to any one of claims 8 to 10, wherein the first information further indicates a third triggering condition, the third triggering condition is used to determine whether to record the first report, the third triggering condition comprises:
when timing of a third timer reaches a third threshold, recording the first report, wherein the third timer is either a T310 timer or a T312 timer of the target secondary node, and
the first information further comprises information about the third threshold.

12. The method according to any one of claims 8 to 11, wherein the third information further indicates the third triggering condition, the third triggering condition is used to determine whether to record the first report, the third triggering condition comprises:
when the timing of the third timer reaches the third threshold, recording the first report, wherein the third timer is either the T310 timer or the T312 timer of the target secondary node, and
the third information further comprises the information about the third threshold.

13. The method according to any one of claims 8 to 12, wherein the second information further indicates that the first triggering condition is associated with the first timer of a secondary node, and/or the second information further indicates that the third triggering condition is associated with the third timer of the secondary node, and/or the second information further indicates that the second triggering condition is associated with the second timer of a master node.

14. The method according to any one of claims 8 to 13, wherein the first information is comprised in a first container, the first container is generated by the target secondary node and provided to the target master node, the third information is comprised in a second container, and the second container is generated by the target master node and provided to the terminal device.

15. The method according to any one of claims 11 to 14, wherein the method further comprises:
adding, by the terminal device, first indication information to the first report, wherein the first indication information indicates a master node handover; and
sending, by the terminal device, the first report to the source master node.

16. The method according to any one of claims 8 to 10, wherein the first information or the third information further indicates a third triggering condition, the third triggering condition is used to determine whether to record the first report, and the third triggering condition comprises:
when timing of a third timer reaches a third threshold, the first report is not recorded, wherein the third timer is either a T310 timer or a T312 timer of the target secondary node; and
the first information or the third information further comprises information about the third threshold.

17. A communication apparatus, wherein the apparatus comprises a unit or a module configured to implement the method according to any one of claims 1 to 7.

18. A communication apparatus, wherein the apparatus comprises a unit or a module configured to implement the method according to any one of claims 8 to 16.

19. A communication apparatus, comprising:
at least one processor, wherein the at least one processor is coupled to a memory, the memory is configured to store a program or instructions, and when the program or the instructions are executed by the at least one processor, the apparatus is enabled to perform the communication method according to any one of claims 1 to 16.

20. A computer-readable storage medium, wherein the computer-readable storage medium stores a computer program, and when the computer program runs on a computer, the computer is enabled to perform the communication method according to any one of claims 1 to 16.

21. A computer program product, comprising computer program code, wherein when the computer program code is run, the communication method according to any one of claims 1 to 16 is implemented.

22. A communication system, wherein the communication system comprises a target master node and/or a terminal device, the target master node is configured to perform the method according to any one of claims 1 to 7, and the terminal device is configured to perform the method according to any one of claims 8 to 16.
